# EUROPÄISCHE PATENTSCHRIFT

(11) **EP 0 963 414 B1**
(45) Veröffentlichungstag und Bekanntmachung des Hinweises auf die Patenterteilung: **25.07.2012**
(21) Anmeldenummer: 98908089.0
(22) Anmeldetag: 12.02.1998
(51) Int. Cl.: C08L 101/00, C08L 83/04, C08K 3/00

(54) **ORGANISCH-ANORGANISCHE HYBRIDMATERIALIEN**
ORGANIC-INORGANIC HYBRID MATERIALS
MATERIAUX HYBRIDES ORGANIQUES-INORGANIQUES

(30) Priorität: 25.02.1997 DE 19707390
(43) Veröffentlichungstag der Anmeldung: 15.12.1999
(73) Patentinhaber: Bayer MaterialScience AG, 51368 Leverkusen (DE)
(72) Erfinder: MAGER, Michael, D-51375 Leverkusen (DE); KRAUS, Harald, D-51375 Leverkusen (DE); PUPPE, Lothar, D-51399 Burscheid (DE)
(86) Internationale Anmeldenummer: PCT/EP1998/000775
(87) Internationale Veröffentlichungsnummer: WO 1998/038251

(56) Entgegenhaltungen:
- EP-A- 0 465 918
- EP-A- 0 743 313
- DATABASE WPI Section Ch, Week 9351 Derwent Publications Ltd., London, GB; Class A28, AN 93-410983 XP002069852 & JP 05 310 994 A (KANSAI SHINGIJUTSU KENKYUSHO KK)

## Beschreibung

Die vorliegende Erfindung betrifft Mischungen zur Herstellung organisch-anorganischer Hybridmaterialien und deren Verwendung.

Durch die Synthese organisch-anorganischer Hybridmaterialien versucht man, typische Eigenschaften anorganischer und organischer Stoffe in einem Material zu kombinieren. So zeichnen sich Gläser und Keramiken bekanntermaßen durch Härte und Sprödigkeit aus, währenddessen organische Polymere elastisch aber gleichzeitig auch wesentlich weicher als die vorgenannten Stoffe sind. Mittlerweile sind vielerlei organisch-anorganische Hybridmaterialien bekannt, die deutlich härter als organische Polymere sind und dennoch nicht die Sprödigkeit von rein anorganischen Materialien aufweisen.

Je nach Art und Weise der Wechselwirkung zwischen anorganischer und organischer Komponente klassifiziert man Hybridmaterialien in verschiedene Typen. Eine Übersicht hierzu findet sich in J. Mater. Chem. 6 (1996) 511.

Eine Klasse von Hybridmaterialien wird dadurch erhalten, daß man eine homogene Mischung eines organischen Polymers mit Metallalkoxiden, z.B. Si(OEt)₄ oder auch CH₃-Si(OEt)₃, mit Wasser zur Reaktion bringt. Nach Hydrolyse und Kondensation der Alkoxide erhält man ein anorganisches Netzwerk, das vom organischen Polymer durchdrungen wird ("interpenetrating network"). Eine kovalente chemische Anbindung des Polymers an die anorganische Phase liegt nicht vor. Beispiele für solche Hybridmaterialien finden sich in US-PS 5,346,939 und WO 93/01226.

Nach Poly. Mater. Sci. Eng. 74 (1996) 65 ist die Verträglichkeit der anorganischen Phase mit stark polaren Polymeren wie Polyamiden, Polyimiden, Polyamidimiden oder Polycarbonaten besonders gut. Bei weniger polaren Polymeren, z.B. den technisch außerordentlich wichtigen Polyvinylchloriden oder Polymethylmethacrylaten, erhält man hingegen oft Phasentrennung, d.h. heterogene, trübe Materialien. Zur Verbesserung der Verträglichkeit wird in solchen Systemen der Zusatz von Polyoxazolinen vorgeschlagen. Eine weitere Klasse von Hybridmaterialien wird in analoger Weise hergestellt, jedoch enthält das eingesetzte organische Polymer reaktive Gruppen, z.B. -Si(OEt)₃, die für eine kovalente chemische Anbindung an das anorganische Netzwerk sorgen. Beispiele hierfür finden sich in ACS Symp. Ser. 585 (1995) 125, Adv. Mater. 6 (1994) 372 und Mater. Lett. 13 (1992) 261.

In WO 93/01226 sind "polymere Komposite" beschrieben, die aus einem organischen und einem anorganischen, glasartigen Polymer bestehen. Als Charakteristikum dieser Materialien wird angegeben, daß das organische Polymer nicht extrahiert werden kann und kein Glas- oder Schmelzpunkt beobachtet wird.

Aus US-PS 5,346,939 sind Mischungen bestehend aus unreaktiven, thermoplastischen Polymeren mit flüssigen, organometallischen Verbindungen bekannt. In Gegenwart von Wasser werden daraus Komposit-Materialien erhalten, in welchen keine Vermischung auf molekularer Ebene vorliegt, sondern die organische und anorganische Phase separiert sind. Solche Komposit-Materialien sind trübe oder weiß und eignen sich daher nicht für Anwendungen, für die hochtransparente Materialien benötigt werden, beispielsweise Decklacke.

Es bestand daher die Aufgabe, transparente Mischungen auf Basis organischer Polymere bereitzustellen, die zur Beschichtung von Oberflächen einsetzbar sind und die vor allem eine gute Haftung, Beständigkeit und Verschleiß- und Kratzfestigkeit sowie eine hohe Transparenz aufweisen. Dies wird durch die erfindungsgemäßen Mischungen ermöglicht.

Gegenstand der vorliegenden Erfindung sind daher transparente Mischungen, enthaltend:
A) mindestens ein organisches Polymer,
B) anorganische Partikel mit einem Primärteilchendurchmesser von 1 bis 100 nm,
C) mindestens ein anorganisch-organisches Bindemittel auf Basis von polyfunktionellen Organosilanen, die mindestens 2 Siliciumatome mit jeweils 1 bis 3 Alkoxy-oder Hydroxygruppen enthalten, wobei die Siliciumatome mit jeweils mindestens einer SiC-Bindung an eine die Siliciumatome verknüpfende Baueinheit gebunden sind, und
D) mindestens ein Lösemittel,
wobei die anorganichen Partikel 4:esel sole (SiO₂), Böhmit-Sole (Al (O) OH) und/oder TiO₂-sole sind.

Organische Polymere A) im Sinne der Erfindung können den Bestandteilen B) und C) gegenüber reaktive oder auch unreaktive Polymere sein.

Unreaktive organische Polymere bilden dabei keine stabilen kovalenten Bindungen mit den anorganischen Partikeln oder dem anorganisch-organischen Bindemittel. Die Bildung von Si-O-C-Bindungen durch Reaktion von OH-Gruppen des Polymers mit Alkoxygruppen, z.B. des organisch-anorganischen Bindemittels, wird im Sinne der Erfindung nicht als stabile kovalente Bindung angesehen, da diese mit Wasser unter milden Bedingungen wieder gespalten werden kann. Im wesentlichen wird eine "Anbindung" des organischen Polymers an die anorganischen Komponenten B) und C) auf schwachen Wechselwirkungen, zB. Wasserstoff-Brückenbindungen, beruhen.

Reaktive organische Polymere im Sinne der Erfindung enthalten Gruppen, die stabile kovalente Bindungen, im wesentlichen Si-O-Si- oder auch Si-O-Al-Bindungen, mit den anorganischen Bestandteilen B) und C) eingehen. Organische Polymere mit entsprechenden reaktiven Gruppen können durch (Co-)Polymerisation hergestellt werden, wie in ACS Symp. Ser. 585 (1995) 125, Adv. Mater. 6 (1994) 372 und Mater. Lett. 13 (1992) 261 beschrieben, oder durch Funktionalisierung eines unreaktiven Polymeren. Hierzu sind insbesondere solche Substanzen geeignet, die eine hohe Reaktivität gegenüber dem organischen Polymer aufweisen und gleichzeitig auch leicht an die anorganische Matrix angebunden werden können. Als Beispiele seien bifunktionelle Organosilane genannt, die als "Coupling Agents", z.B. zur Einbettung von Glasfasern in Polymere, bereits eine weite Verbreitung finden. Im Einzelnen seien beispielhaft folgende Organosilane genannt, wobei R = alkyl, aryl, bevorzugt methyl oder ethyl sein kann:
a) H₂N-(CH₂)₃Si(OR)₃
b) H₂N-(CH₂)₂-HN-(CH₂)₃Si(OR)₃
c) H₂N-(CH₂)₂-HN-(CH₂)₃Si(OR)₂(CH₃)
d) C₆H₅-HN-(CH₂)₃Si(OR)₃
e) H₂N-(CH₂)₂-HN-(CH₂)₂-HN-(CH₂)₃Si(OR)₃
f) OCN-(CH₂)₃Si(OR)₃
g) HS-(CH₂)₃Si(OR)₃
h) H₂COCH-CH₂-O-(CH₂)₃Si(OR)₃
i) H₂C=C(CH₃)-COO-(CH₂)₃Si(OR)₃
j) H₂C=CH-Si(OR)₃

Die genannten bifunktionellen Organosilane können z.B. in der im folgenden schematisch dargestellten Art und Weise mit organischen Polymeren zur Reaktion gebracht werden: 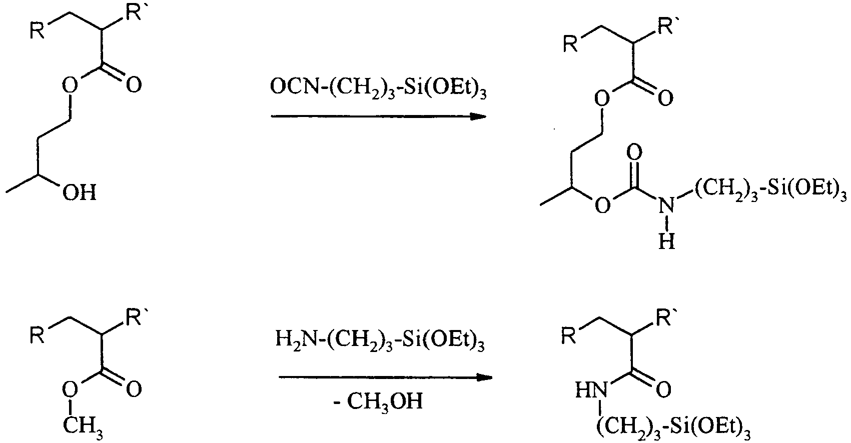 R, R'= Reste einer beliebigen Polymerkette

Es ist aber auch möglich, zunächst die anorganischen Komponenten B) und/oder C), gegebenenfalls mit den bifunktionellen Organosilanen, reagieren zu lassen, im wesentlichen unter Bildung von Si-O-Si-Bindungen, und danach erst die Reaktion mit dem organischen Polymeren durchzuführen.

Als Beispiele für organische Polymere A) seien Polyimide, Polycarbonate, Polyester, Polyamide, Polyketone, Polyether, Polystyrole, Polyacrylnitrile, Polyacrylamide, Polymethacrylatester, Polyacrylatester, Polyvinylester, Polyvinylether und Polyolefine, sowie deren Copolymere und Mischungen ("Blends") genannt.

Bevorzugt werden handelsübliche Polyol-Polymere, z.B. auf Basis von Polyestern, Polyacrylestern oder Polymethacrylestern, und isocyanatgruppenhaltige Polymere verwendet. Beispiele hierfür sind Polyole auf Basis von Polyacrylaten oder linearen und verzweigten Polyestern bzw. Polyestern/Polyethern.

Werden mehrere organische Polymere A) eingesetzt, so können diese auch untereinander zur Reaktion gebracht werden, beispielsweise durch Addtition von Polyol-Polymeren mit isocyanatgruppenhaltigen Polymeren.

Anorganische Partikel B) im Sinne der Erfindung weison einen Primärteilchendurchmesser von 1 bis 100 nm, bevorzugt 5 bis 50 nm auf. Der Teilchendurchmesser (Primärteilchendurchmesser) wurde mittels Ultrazentrifugation nach Colloid Polym. Sci. 267 (1989) 1113 bestimmt. Dies ist ein Bereich, in welchem sichtbares Licht (ca. 400 bis 700 nm) nur vernachlässigbar gering gestreut wird; somit können hochtransparente Materialien erhalten werden. Beispiele für erfindungsgemäße anorganische Partikel sind Kieselsole (SiO₂), Böhmit-Sole (Al(O)OH) und/oder TiO₂-Sole. Bevorzugt sind Kieselsole in organischen Lösungsmitteln, da diese leicht mit anderen Lösemitteln, die z.B. die organischen Polymeren A) enthalten, vermischt werden können. Zur Erhöhung des Feststoffgehaltes der erfindungsgemäßen Mischungen ist es aber auch möglich, die anorganischen Partikeln B) ohne die Verwendung zusätzlicher Lösemittel in den organischen Polymeren zu dispergieren (Lösemittel, die zum Auflösen der organischen Polymeren benötigt werden, sind im Sinne der Erfindung keine "zusätzlichen Lösemittel"). Bevorzugt werden Dispersionen von SiO₂-Partikeln in polaren organischen Polymeren, z.B. OH-Gruppen enthaltenden Polymeren, eingesetzt, besonders bevorzugt in Polyolen, die üblicherweise mit isocyanatgruppenhaltigen organischen Polymeren umgesetzt werden.

Organisch-anorganische Bindemittel C) im Sinne der Erfindung sind polyfunktionelle Organosilane, die mindestens 2, bevorzugt mindestens 3 Siliciumatome mit jeweils 1 bis 3 Alkoxy- oder Hydroxygruppen enthalten, wobei die Siliciumatome mit jeweils mindestens einer Si-C-Bindung an eine die Siliciumatome verknüpfende Baueinheit gebunden sind.

Als verknüpfende Baueinheiten im Sinne der Erfindung seien beispielhaft lineare oder verzweigte C₁- bis C₁₀-Alkylenketten, C₅- bis C₁₀-Cycloalkylenreste, aromatische Reste, z.B. Phenyl, Naphtyl oder Biphenyl, oder auch Kombinationen von aromatischen und aliphatischen Resten genannt. Die aliphatischen und aromatischen Reste können auch Heteroatome, wie Si, N, O, S oder F enthalten.

Beispiele für polyfunktionelle Organosilane sind Verbindungen der allgemeinen Formel (I)

R⁶₄₋ᵢSi[(CH₂)ₙSi(OR⁷)R⁸₃₋ₐ]ᵢ (I)

mit
i = 2 bis 4, bevorzugt i = 4,
n = 1 bis 10, bevorzugt n = 2 bis 4, besonders bevorzugt n = 2 und
R⁶ = Alkyl, Aryl,
R⁸ = Alkyl, Aryl, bevorzugt R⁸ = Methyl,
a = 1 bis 3,
R⁷ = Alkyl, Aryl, bevorzugt R⁷ = Methyl, Ethyl, Isopropyl;
für den Fall a = 1 kann R⁷ auch Wasserstoff bedeuten.

Weitere Beispiele sind cyclische Verbindungen der allgemeinen Formel (II) 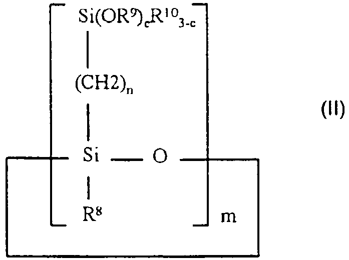 mit
m = 3 bis 6, bevorzugt m = 3 oder 4,
n = 2 bis 10, bevorzugt n = 2,
R⁸ = C₁-C₆ Alkyl oder C₆-C₁₄ Aryl,
bevorzugt R⁸ = Methyl, Ethyl, besonders bevorzugt R⁸= Methyl,
R¹⁰ = Alkyl, Aryl, bevorzugt R¹⁰ = Methyl,
c = 1 bis 3,
R⁹ = Alkyl, Aryl, bevorzugt R⁹ = Methyl, Ethyl, Isopropyl;
für den Fall c = 1 kann R⁹ auch Wasserstoff bedeuten.

Weitere Beispiele für polyfunktionelle Organosilane sind Verbindungen der allgemeinen Formel (III)

Si[OSiR¹¹₂(CH₂)ₚSi(OR¹²)_{d}R¹³_{3-d}]ᵢ (III)

mit
p = 1 bis 10, bevorzugt p = 2 bis 4, besonders bevorzugt p = 2,
R¹¹ = Alkyl, Aryl, bevorzugt R¹¹ = Methyl,
R¹³ = Alkyl, Aryl, bevorzugt R¹³ = Methyl,
d = 1 bis 3,
R¹² = Alkyl, Aryl, bevorzugt R¹² = Methyl, Ethyl, Isopropyl;
für den Fall d = 1 kann R¹² auch Wasserstoff sein.

Ebenfalls einsetzbar sind die Oligomere, d.h. Hydrolyse- und/oder Kondensationsprodukte aus Verbindungen der vorgenannten Formeln (I), (II) und/oder (III).

Weiterhin seien als polyfunktionelle Organosilane Silanole bzw. Alkoxide, z.B.:
a) Si[(CH₂)₂Si(OH)(CH₃)₂]₄
b) *cyclo*-{OSiMe[(CH₂)₂Si(OH)Me₂]}₄, bzw.
c) *cyclo*-{OSiMe[(CH₂)₂Si(OEt)₂Me]}₄
d) *cyclo*-(OSiMe[(CH₂)₂Si(OMe)Me₂]}
e) *cyclo*-{OSiMe[(CH₂)₂Si(OEt)₃]}₄,
genannt.

Die erfindungsgemäßen Mischungen können, z.B. zur Erhöhung der Verschleißfestigkeit, zusätzlich Metall- und Nichtmetallalkoxide E) enthalten. Als Beispiele genannt seien Alkoxide der allgemeinen Formel (IV)

R³_{x-y}M(OR²)_{y} (IV)

mit
M = Si, Sn, Ti, Zr (x = 4, y = 1 bis 4) oder
M=B, Al (x = 3,y = 1 bis 3),
R²,R³ = Alkyl, Aryl,
bevorzugt R²,R³ = Methyl, Ethyl, Isopropyl, n-Butyl, sec-Butyl, tert-Butyl, Phenyl,
besonders bevorzugt R²,R³ = Methyl und Ethyl.

Beispiele sind Si(OEt)₄, Si(OMe)₄, H₃C-Si(OEt)₃, C₆H₅-Si(OEt)₃, B(OEt)₃, Al(OⁱPr)₃ oder Zr(OⁱPr)_{4;} bevorzugt wird Si(OEt)₄ eingesetzt. Anstelle monomerer Alkoxide können auch deren Kondensationsprodukte verwendet werden. Kommerziell erhältlich sind z.B. Si(OEt)₄-Kondensate.

Die erfindungsgemäßen Mischungen können darüber hinaus auch Katalysatoren F) zur Beschleunigung der Hydrolyse- und Kondensationsreaktionen und/oder Pigmente zur Einfärbung oder zum Korrosionsschutz enthalten.

Als Lösemittel D) sind z.B. Alkohole, wie Methanol, Ethanol, Isopropanol, 1-Butanol,-2-Butanol, 1,2-Ethandiol und Glycerin, Ketone, wie Aceton, Methylethylketon, Methylisobutylketon und Butanon, Ester, wie Essigsäureethylester oder Essigsäurebutylester, Aromaten, wie Toluol oder Xylol, Ether, wie tert.Butymethylether, sowie aliphatische Kohlenwasserstoffe geeignet.

Als Katalysatoren F) können organische und anorganische Säuren oder Basen sowie metallorganische Verbindungen oder auch Metallalkoxide eingesetzt werden.

In einer bevorzugten Ausführungsform der Erfindung weist die Mischung, unter Vernachlässigung der Lösemittel D) und aller zusätzlichen Bestandteile, wie z.B. Katalysatoren und/oder Pigmente, folgende Zusammensetzungen auf:
3 bis 80 Gew.-% organische Polymere A),
1 bis 60 Gew.-% anorganische Partikel B),
1 bis 80 Gew.-% anorganisch-organische Bindemittel C) und
0 bis 60 Gew.-% Metall- und Nichtmetallalkoxide E),
wobei sich die Bestandteile A), B), C) und E) zu 100 % addieren.

In einer besonders bevorzugten Ausführungsform der Erfindung weist die Mischung, unter Vernachlässigung der Lösemittel D) und aller zusätzlichen Bestandteile, wie z.B. Katalysatoren und/oder Pigmente, folgende Zusammensetzungen auf:
8 bis 50 Gew.-% organische Polymere A),
5 bis 40 Gew.-% anorganische Partikel B),
3 bis 50 Gew.-% anorganisch-organische Bindemittel C) und
0 bis 50 Gew.-% Metall- und Nichtmetallalkoxide E),
wobei sich die Bestandteile A), B), C) und E) zu 100 % addieren.

Die Menge des Lösemittels D) wird bevorzugt so gewählt, daß der Feststoffgehalt der Mischung zwischen 5 und 80 %, besonders bevorzugt zwischen 10 und 60 %, liegt.

Zur Herstellung der erfindungsgemäßen Mischungen werden die Komponenten in beliebiger Reihenfolge vermischt. Die organischen Polymere werden dabei bevorzugt in einem Lösemittel eingesetzt.

Zur Herstellung von Mischungen, die zu Materialien führen, in denen organisches Polymer und anorganische Komponente nicht kovalent verbunden sind, ist folgende Ausführungsform bevorzugt: das organische Polymer A) wird in einem Lösemittel D) vorgelegt, unter Rühren werden die anorganischen Partikel B), bevorzugt als transparente Dispersion in einem Lösemittel, und das organisch-anorganische Bindemittel C) zugegeben, danach gegebenenfalls Alkoxide, weitere Lösemittel, Wasser, Katalysatoren und/oder Pigmente.

Für Mischungen, aus denen Materialien hergestellt werden sollen, in denen organisches Polymer und anorganische Komponente hydrolysestabil kovalent verbunden sind, wird in einer bevorzugten Ausführungsform das organische Polymer A) zunächst mit einem bifunktionellen Organosilan zur Reaktion gebracht. Nach vollständiger Umsetzung gibt man dann die anorganischen Partikel B), bevorzugt als transparente Dispersion in einem Lösemittel, und das organisch-anorganische Bindemittel C) zu, und schließlich gegebenenfalls weitere Lösemittel, Wasser, Katalysatoren und/oder Pigmente.

In einer weiteren Ausführungsform könnnen bifunktionelle Organosilane auch zunächst mit den anorganischen Partikeln B) und/oder dem organisch-anorganischen Bindemittel C) zur Reaktion gebracht werden. Danach wird das organische Polymer A) zugegeben und gegebenenfalls werden Alkoxide, weitere Lösemittel, Wasser, Katalysatoren und/oder Pigmente hinzugefügt.

In den genannten Ausführungsformen können die anorganischen Partikel B) auch als Dispersionen in den organischen Polymeren A), gegebenenfalls in Gegenwart von Lösemitteln, eingesetzt werden.

Die erfindungsgemäßen Mischungen sind sofort nach dem Vermischen der Ausgangskomponenten einsatzbereit und können beispielsweise für Lackierungen benutzt werden. Bevorzugt rührt man jedoch die Mischungen für eine gewisse Zeit; insbesondere in Gegenwart von Wasser und Kondensationskatalysatoren, so bilden sich aus dem organisch-anorganischen Bindemittel oder gegebenenfalls zugesetzten Metallalkoxiden Polykondensate. Die so behandelten Mischungen härten deutlich rascher als solche, die frisch zubereitet werden.

Durch Entfernen der flüchtigen Bestandteile aus den erfindungsgemäßen Mischungen können organisch-anorganische Hybridmaterialien hergestellt werden. Dies kann z.B. durch Verdampfen der flüchtigen Bestandteile bei Temperaturen von -10 bis 200 °C, bevorzugt 15 bis 160 °C, erfolgen.

Die so erhaltenen organisch-anorganischen Hybridmaterialien bestehen aus sich durchdringenden Netzwerken bzw. einer molekularen Mischung anorganischer und organischer Komponenten. Das anorganische Netzwerk wird dabei aus den anorganischen Partikeln B), dem organisch-anorganischen Bindemittel C) und gegebenenfalls Alkoxiden und/oder bifunktionellen Organosilanen bzw. den entsprechenden Hydrolyse- und Kondensationsprodukten aller vorgenannten Komponenten aufgebaut. Charakteristisch für die Materialien ist, daß das anorganische Netzwerk Baueinheiten enthält, in denen Siliciumatome über organische Reste verknüpft sind, an die sie über Si-C-Bindungen gebunden sind.

Die neuen Materialien eignen sich z.B. zur Herstellung von Beschichtungen und Formkörpern. Formkörper aus den erfindungsgemäßen Materialien zeigen beispielsweise gegenüber Formkörpern aus Polyurethanen durch den hohen Anteil an anorganischen Komponenten eine verringerte Entflammbarkeit.

Beschichtungen aus den erfindungsgemäßen Materialien zeichnen sich aus durch gute Haftung, hohe Transparenz, Lösemittel- und Chemikalienbeständigkeit, Verschleißfestigkeit und Elastizität. Die Beschichtungen haften sehr gut auf Glas und Metallen, darüber hinaus aber auch auf vielen organischen und keramischen Materialien. So können z.B. Grundierungen aus Polyurethanlacken problemlos überlackiert werden. Auch können zur Verbesserung der Kratzfestigkeit gut haftende Beschichtungen ohne Vorbehandlung auf transparente Kunststoffe wie Polycarbonat aufgebracht werden.

Die erfindungsgemäßen organisch-anorganischen Hybridmaterialien können z.B. als transparente Beschichtungen dort eingesetzt werden, wo hohe Verschleißfestigkeit, Elastizität, Chemikalien- und Lösemittelbeständigkeit gefordert sind. Als Beispiele seien Decklackierungen im Fahrzeugbereich, im marinen Bereich (Schiffe, Hafenanlagen) oder auch im chemischen Apparatebau (z.B. Innen- und Außenbeschichtung von Rohrleitungen oder Reaktoren) genannt.

Für einen Einsatz im Automobilbereich ist eine hohe Verschleißfestigkeit bei gleichzeitiger Lösemittel- und Chemikalienbeständigkeit wesentlich. Um ein (großflächiges) Abplatzen der Lackfilme bei Beschädigung durch Deformation zu vermeiden, müssen die Beschichtungen auch eine gewisse Elastizität aufweisen. Aus den erfindungsgemäßen organisch-anorganischen Hybridmaterialien sind Beschichtungen herstellbar, deren Lösemittel- und Chemikalienbeständigkeit gleich gut oder teilweise sogar besser ist als die der besten praxiserprobten Decklacke, gleichzeitig zeigen die erfindungsgemäßen Materialien aber eine wesentlich verbesserte Verschleißfestigkeit. Insbesondere die erfindungsgemäßen Beschichtungen mit hohem Anteil anorganischer Komponenten sind z.B. auch als Antifouling-Beschichtung für Schiffe geeignet.

Aufgrund ihrer abstoßenden Wirkung gegenüber vielen Farbstoffen und der guten Lösemittelfestigkeit, sind die erfindungsgemäßen Beschichtungen auch als Anti-Graffiti-Lackierungen gut geeignet. Zum einen werden die Beschichtungen so schlecht benetzt, daß der Farbstoffilm zu Tropfen zusammenläuft, zum anderen kann der getrocknete Farbstoff mühelos entfernt werden. Die Beschichtungen können auch auf bereits bestehende Beschichtungen aufgebracht werden, um Fahrzeuge oder auch Bauten wirksam zu schützen.

Die nachfolgenden Beispiele dienen der Erläuterung der Erfindung, ohne dabei limitierend zu wirken.

### Beispiele

Die als organische Polymere eingesetzten Polyacrylate sind kommerziell erhältlich unter dem Handelsnamen Desmophen^{®} bei der Bayer AG, D-51386 Leverkusen. Wenn nicht anders angegeben, wurde Desmophen^{®} A 665 (3,0 % OH-Gruppen) als 65 %ige Lösung in n-Butylacetat/Xylol (3:1) eingesetzt und Desmophen^{®} A 450 (1,0 % OH-Gruppen) als 50 %ige Lösung in n-Butylacetat.

cyclo-{OSiMe[(CH₂)₂Si(OH)Me₂]}₄ ("D4-Silanol") und cyclo-{OSiMe[(CH₂)₂Si(OEt)₂Me]}₄ ("D4-Diethoxid") wurden, wie in Beispiel 1 bzw. 2 beschrieben, durch Hydrosilylierung von cyc/o-{OSi(CH₃)(C₂H₃)}₄ mit HSiClMe₂ bzw. HSiCl₂Me und nachfolgender Hydrolyse bzw. Alkoholyse hergestellt.

Si[(CH₂)₂Si(OH)Me₂]₄ ("TVS-Silanol") wurde in entsprechender Weise aus Tetravinylsilan, HSiClMe₂ und anschließender Hydrolyse hergestellt, wie in DE OS 19 603 242 beschrieben.

Die Hydrosilylierungskatalysatoren sind kommerziell erhältlich, z.B. "Silopren U Katalysator Pt/S" (68 %ige Lösung eines mit cyclo-{OSi(CH₃)(C₂H₃)}₄-Liganden substituierten Pt-Komplexes in Isopropanol), Bayer AG, D-51368 Leverkusen, oder wurden wie angegeben hergestellt.

Die Synthesen der obengenannten Verbindungen wurden in Argonatmosphäre bzw. im Vakuum durchgeführt.

Das verwendete (Organo)kieselsol bestand aus einer Dispersion von ca. 30 Gew.-% SiO₂ (Primärteilchendurchmesser ca. 9 nm) in Isopropanol. Der angegebene SiO₂-Gehalt ergibt sich aus der zugesetzten Menge (Organo)kieselsol (SiO₂-Gehalt 30 %) und TEOS (SiO₂-Gehalt 28,8 % bei vollständiger Kondensation) bezogen auf den Gesamtfeststoff.

Die Filme wurden mittels eines Filmziehrahmens (Rakel) auf Glas appliziert und, wenn nicht anders angegeben, 1 h bei 130 °C im Umluftschrank ausgehärtet.

Zur Überprüfung der Haftung wurde ein Gitterschnittest in Anlehnung an ISO 2409 durchgeführt. Die Bestimmung der Bleistifthärte erfolgte in Anlehnung an ASTM D 3363-92a mit Bleistiften der Marke "Stabilo-micro 8000" (Fa. Schwan, Deutschland) Härte B bis 7H. Angegeben ist der Härtegrad des Bleistifts, welcher den Film nicht bis zum Untergrund ritzt. Die Pendelhärte wurde nach DIN 53 157, die Erichsen-Tiefung nach DIN ISO 1520 bestimmt.

Die Lösemittelbeständigkeit wurde visuell überprüft (1 min bzw. 5 min Einwirkzeit): "0" (unverändert) bis "5" (deutlich verändert: z.B. Blasenbildung, Ab- oder Auflösung, Erweichung).

Der Waschstraßentest wurde in einer Laborwaschstraße bestehend aus einer rotierenden Bürste (Polyethylenborsten) und zwei Düsen zur Zuführung des abrasiven Mediums (Quarzsand, mittlere Teilchengröße 25 µm) durchgeführt. Die zu untersuchende, beschichtete Platte wurde unter der Bürste zehnmal hin und zurückbewegt und gleichzeitig mit der Wasser-Sand-Mischung besprüht. Nach 10 Cyclen wurde die Oberfläche mit Ethanol gereinigt und der Glanzverlust bestimmt (Glanzmessung bei 20°).

Die Wirksamkeit als Anti-Graffiti-Beschichtung wurde durch einstündiges Einwirken einer 1 %igen Fuchsinlösung in Wasser-Ethanol-Butylglycol (1:1:1) geprüft. Der trockene Film wurde mit einem Ethanol-getränkten Papiertuch abgewischt und verbleibender Farbstoff visuell in die Kategorien "schwach rosa" und "rosa" klassifiziert. Keine erkennbaren Fuchsin-Reste wurde mit "restlos entfernt" angegeben.

Wenn nicht anders angegeben, sind Prozentangaben Gewichtsprozent.

### Beispiel 1

Belegung von pulverförmiger Aktivkohle mit H₂PtCl₆

49,5 g Aktivkohle Norit CN 1 wurden in 300 ml bidestilliertem Wasser aufgeschlämmt und mit 200 ml einer wäßrigen H₂PtCl₆-Lösung, die 0,5 g Pt - gerechnet als Metall - enthielt, versetzt. Man rührte 10 min nach und saugte den Katalysator auf einer Filternutsche ab. Das wasserfeuchte Rohprodukt (153 g) wurde bei 0,1 Pa und 110°C getrocknet und unter Argon gelagert. Der Katalysator enthielt 1 % Platin.

### Synthese von cyclo-{OSiMe[(CH₂)₂SiClMe₂]}₄

Zu 50 g (145,2 mmol) cyclo-{OSi(CH₃)(C₂H₃)}₄ in 120 ml THF wurden 69 g (726,7 mmol) Chlordimethylsilan und 800 mg des Katalysators (Herstellung wie oben beschrieben) gegeben. Man erwärmte die Reaktionsmischung auf 50°C, wobei auch nach 2 h bei dieser Temperatur keine Wärmeentwicklung beobachtet wurde. Nach weiteren 20 h bei 55 bis 60°C kühlte man auf Raumtemperatur ab und filtrierte den Katalysator über eine Umkehrfrittte ab. Das klare, farblose Filtrat wurde im Vakuum von flüchtigen Bestandteilen befreit und man erhielt das Produkt als farbloses Öl.

### Synthese von cyclo-{OSiMe[(CH₂)₂Si(OH)Me₂]}₄

Zu einer Mischung bestehend aus 87,4 ml (63,6 g; 628,3 mmol) Triethylamin, 12,1 ml (12,1 g; 672,2 mmol) Wasser und 2850 ml tert. Butylmethylether tropfte man innerhalb einer Stunde 105 g (145,2 mmol) *cyclo*-{OSiMe[(CH₂)₂SiCIMe₂]}₄ in 100 ml Diethylether. Nach Ende der Zugabe rührte man noch einer Stunde und filtrierte dann den Niederschlag aus Triethylammoniumhydrochlorid ab. Dann entfernte man die flüchtigen Bestandteile im Vakuum mittels Rotationsverdampfer, nahm den öligen Rückstand in wenig THF auf und filtrierte über Kieselgel. Nach dem erneuten Entfernen aller flüchtigen Bestandteile im Vakuum erhielt man das Produkt als viskoses Öl.

Ausbeute: 69,5 g, entsprechend 74 % der Theorie.

### Beispiel 2

### Synthese von cyclo-{OSiMe[(CH₂)₂SiCl₂(CH₃)]}₄

249,5 g (725,5 mmol) *cyclo*-{OSi(CH₃)(C₂H₃)}₄ wurden in 250 ml Toluol (p.a.) vorgelegt und nach Zugabe von 50 µl Silopren U-Katalysator auf 100°C erwärmt. Dann wurden 30 ml Dimethylchlorsilan rasch zugegeben, wobei die Temperatur sofort auf 110°C stieg. Jetzt begann man mit dem Zutropfen der von 332,3 ml (367,2 g; 3,19 mol) Dimethylchlorsilan verbliebenen Menge. Während des Zutropfens (ca. 2 Stunden) stieg die Temperatur der Reaktionsmischung zwischenzeitlich auf ca. 120°C, fiel aber bei den letzten 30 ml auf 107°C ab. Die gelbliche Reaktionsmischung wurde noch 2 Stunden bei 110°C gerührt und dann auf Raumtemperatur abgekühlt. Nach dem Abkondensieren der flüchtigen Bestandteile im Vakuum erhielt man ein fahlgelbes Öl.

Ausbeute: 581,0 g, entsprechend 99,6 % der Theorie.

### Synthese von cyclo-{OSiMe[(CH₂)₂Si(OEt)₂(CH₃)]}₄

581,0 g (722,2 mmol) *cyclo*-{OSiMe[(CH₂)₂SiCl₂(CH₃)]}₄ (Herstellung wie oben beschrieben) wurden in 500 ml gelöst und unter Rühren zu 476,0 g (10,33 mol) Ethanol (p.a.) getropft. Nach dem Zutropfen (ca. 2 Stunden), währenddessen sich die Reaktionsmischung auf ca. 32°C erwärmte, erwärmte man noch 2 Stunden auf Rückfluß, wobei noch lebhaft Salzsäuregas entwich. Schließlich wurden die flüchtigen Bestandteile zunächst bei Normaldruck, später im Vakuum, abdestilliert. Es wurde eine schwach gelbliches Öl erhalten.

### Beispiel 3

### D4-Silanol/ Desmophen^{®} A 665 ohne zusätzliche Lösemittel

15 g *cyclo*-{OSiMe[(CH₂)₂Si(OH)Me₂]}₄ wurden mit 108,4 g Desmophen^{®} A 665 solange verrührt, bis eine homogene Mischung erhalten wurde. Dann wurden 135,5 ml Organosol, 75 ml TEOS und 12 ml 0,1 N Salzsäure zugegeben und die homogene Mischung weitere 2 h gerührt. Feststoffgehalt: 43 %.

Nach Applikation und Aushärtung wurde ein transparenter, rißfreier Film, der ein schwaches Trocknungsmuster aufwies, erhalten.

| Naßfilmdicke [µm] | Trockenfilmdicke [µm] | Bleistifthärte | Anti-Gaffiti-Test |
|---|---|---|---|
| 240 | 46 | 6 H | restlos entfernt |

### Beispiel 4

### D4-Silanol/ Desmophen^{®} A 665 mit geringem Organosol-Anteil

150 g einer 10 %igen Lösung von *cyclo*-{OSiMe[(CH₂)₂Si(OH)Me₂]}₄ in n-Butanol, 108,4 g Desmophen^{®} A 665, 68 ml Organosol, 75 ml TEOS und 12 ml 0,1 N Salzsäure erhalten.

Nach Applikation und Aushärtung wurde ein transparenter, rißfreier Film erhalten.

| Naßfilmdicke [µm] | Trockenfilmdicke [µm] | Bleistifthärte | Anti-Gaffiti-Test |
|---|---|---|---|
| 120 | 15 | 5 H | schwach rosa |

### Beispiel 5

### D4-Silanol/ Desmophen^{®} A 665 mit hohem Organosol-Anteil

150 g einer 10 %igen Lösung von *cyclo*-{OSiMe[(CH₂)₂Si(OH)Me₂]}₄ in n-Butanol, 108,4 g Desmophen^{®} A 665, 135,5 ml Organosol, 75 ml TEOS und 12 ml 0,1 N Salzsäure wurden zusammengegeben und 2 h gerührt. Es wurde eine homogene Mischung erhalten.

Die Applikation erfolgte durch Sprühen (Trägergas: Stickstoff); Automobil-spezifische Prüfungen:

| Trockenfilmdicke [µm] | Pendelhärte [Schwingungen] | Erichsen-Tiefung [mm] | Lösemittelbeständigkeit^{*)} | Chemikalienbeständigkeit [°C]^{**)} | Waschstrassentest [%]^{***)} |
|---|---|---|---|---|---|
| 40 | 130 | 3,0-4,5 | 0 | 36 | 82,5 |
| | | | 0 | 36 | 60,3 |
| | | | 1 | 36 | 22,2 |
| | | | 2 | 36 | |
| | | | 0 | 45 | |

| | | | | | |
|---|---|---|---|---|---|
| ^{*)} Xylol, MPA, Ethylacetat, Aceton (1 min Einwirkzeit), Benzin (10 min). ^{**)} Baumharz, Bremsflüssigkeit, Pankreatin (50 %), NaOH (1 %), Schwefelsäure (1%); angegebene Temperatur entspricht der ersten sichtbaren Schädigung. ^{***)} Glanzverlust nach 10 Waschungen, bestimmt bei 20° Einfallswinkel (Ausgangsglanz, Endglanz, Differenz). Zum Vergleich: Glanzverlust eines handelsüblichen 2K-Polyurethan-Decklacks: 35,2. | | | | | |

### Beispiel 6

### D4-Silanol/ Desmophen^{®} A 665 mit Vorreaktion der anorganischen Komponenten

150 g einer 10 %igen Lösung von *cyclo*-{OSiMe[(CH₂)₂Si(OH)Me₂]}₄ in n-Butanol, 68 ml Organosol, 75 ml TEOS und 12 ml 0,1 N Salzsäure wurden zusammengegeben und 2 h gerührt. Danach wurden 108,4 g Desmophen^{®} A 665 zugegeben und weitere 15 min gerührt. Es wurde eine homogene Mischung erhalten.

Nach Applikation und Aushärtung wurde ein transparenter, rißfreier Film erhalten.

| Naßfilmdicke [µm] | Trockenfilmdicke [µm] | Bleistifthärte | Anti-Graffiti-Test |
|---|---|---|---|
| 120 | 15 | 6 H | schwach rosa |

### Beispiel 7

### D4-Silanol/ Desmophen® A 665 (70 % in n-Butylacetat)

1,5 g *cyclo*-{OSiMe[(CH₂)₂Si(OH)Me₂]}₄ wurden mit 10,08 g Desmophen^{®} A 665 solange verrührt, bis eine homogene Mischung erhalten wurde. Dann wurden 13,6 ml Organosol, 7,5 ml TEOS und 1,2 ml 0,1 N Salzsäure zugegeben und die homogene Mischung weitere 2 h gerührt.

Nach Applikation und Aushärtung wurde ein transparenter, rißfreier Film erhalten.

| Naßfilmdicke [µm] | Trockenfilmdicke [µm] | Bleistifthärte | Anti-Graffiti-Test |
|---|---|---|---|
| 240 | 46 | 6 H | schwach rosa |

### Beispiele 8-10

### D4-Diethoxid/ Desmophen^{®} A 665

In der in der Tabelle angegebenen Reihenfolge wurden die Edukte zusammengegeben und 2 h gerührt. Es wurden homogene Mischungen erhalten.

| Komponente | Beispiel 8 | Beispiel 9 | Beispiel 10 |
|---|---|---|---|
| D4-Diethoxid [g] | 5,25 | 5,25 | 5,25 |
| TEOS [g] | 5,02 | 5,02 | 5,02 |
| Ethanol [ml] | | 10,0 | |
| Butanol [ml] | 10,0 | | 10,0 |
| 0,1 N HCl [g] | 1,10 | 1,10 | 1,10 |
| (Organo)kieselsol [ml] | 10,0 | 10,0 | 15,0 |
| Desmophen^{®} A 665 [g] | 1,50 | 1,50 | 1,50 |
| Feststoffgehalt [%] | 28,8 | 29,0 | 29,0 |
| SiO₂-Gehalt [%] | 49,9 | 49,9 | 57,1 |

Nach Applikation und Aushärtung wurden transparente, rißfreie Filme erhalten.

| Bsp.-Nr. | Naßfilmdicke [µm] | Trockenfilmdicke [µm] | Bleistifthärte | Anti-Graffiti-Test |
|---|---|---|---|---|
| 8 | 120 | 13 | 6 H | schwach rosa |
| 9 | 120 | 12 | 6 H | schwach rosa |
| 10 | 120 | 14 | 6 H | schwach rosa |

### Beispiele 11 und 12

D4-Diethoxid/ Desmophen^{®} A 665 mit Vorreaktion der anorganischen Komponenten.

Die in der Tabelle angegebenen (anorganischen) Komponenten wurden zusammengegeben und 2 h gerührt; anschließend wurde das organische Polymer (Desmophen^{®} A 665) zugegeben und solange gerührt, bis homogene Mischungen vorlagen.

| **Komponente** | **Beispiel 11** | **Beispiel 12** |
|---|---|---|
| D4-Diethoxid [g] | 5,25 | 5,25 |
| TEOS [g] | 5,02 | 5,02 |
| Ethanol [ml] | 10,0 | 10,0 |
| 0,1 N HCl [g] | 1,10 | 1,10 |
| (Organo)kieselsol [ml] | 10,0 | 10,0 |
| Desmophen^{®} A 665 [g] | 1,0 | 1,50 |
| Feststoffgehalt [%] | 28,3 | 29,0 |
| SiO₂-Gehalt [%] | 51,9 | 49,9 |

Nach Applikation und Aushärtung wurden transparente, rißfreie Filme erhalten.

| **Bsp.-Nr.** | **Naßfilmdicke [µm]** | **Trockenfilmdicke [µm]** | **Bleistifthärte** | **Anti-Graffiti-Test** |
|---|---|---|---|---|
| 11 | 120 | 20 | 6 H | restlos entfernt |
| 12 | 120 | 12 | 6 H | schwach rosa |

### Beispiele 13 und 14

Umsetzung von Desmophen^{®} A 665 (70 % in n-Butylacetat) mit OCN-(CH₂)₃-Si(OEt)₃

Jeweils 100 g Desmophen^{®} A 665 wurden mit 0,7 g (**Beispiel 13**) bzw. 3,5 g (**Beispiel 14**) OCN-(CH₂)₃-Si(OEt)₃ gerührt und danach 5 h im Trockenschrank bei 45°C getempert. Es wurde eine farblose Mischung mit nicht merklich veränderter Viskosität erhalten.

D4-Silanol/ Desmophen^{®} A 665 (funktionalisiert mit OCN-(CH₂)₃-Si(OEt)₃).

In der in der Tabelle angegebenen Reihenfolge wurden die Edukte zusammengegeben und 2 h gerührt. Es wurden homogene Mischungen erhalten.

| **Komponente** | **Beispiel 13** | **Beispiel 14** |
|---|---|---|
| D4-Silanol [g] | 1,50 | 1,50 |
| Butanol [ml] | 13,5 | 13,5 |
| Desmophen^{®} A 665 [g] (modifiziert nach a)) | 10,0 | |
| Desmophen^{®} A 665 [g] (modifiziert nach b)) | | 10,0 |
| Organosol [g] | 13,6 | 13,6 |
| TEOS [ml] | 7,50 | 7,50 |
| 0,1 N HCl [g] | 1,20 | 1,20 |
| Feststoffgehalt [%] | 33,0 | 32,9 |
| SiO₂-Gehalt [%] | 41,8 | 42,0 |

Nach Applikation und Aushärtung wurden transparente, rißfreie Filme erhalten.

| **Bsp.-Nr.** | **Naßfilmdicke [µm]** | **Trockenfilmdicke [µm]** | **Bleistifthärte** | **Anti-Graffiti-Test** |
|---|---|---|---|---|
| 13 | 240 | 37 | 6 H | restlos entfernt |
| 14 | 240 | 26 | 6 H | restlos entfernt |

### Beispiele 15-17

### TVS-Silanol/ Desmophen^{®} A 450 (50% in n-Butylacetat/Xylol 1:1)

2,0 g Si[(CH₂)₂Si(OH)Me₂]₄, 4,0 ml TEOS, 5,0 ml Ethanol und 1,0 ml 0,1 N Salzsäure wurden zusammengegeben und 1 h gerührt. Danach wurden zu je 2 ml dieser Lösung 2 g Desmophen^{®} A 450 (**Beispiel 15**), 1,0 g Desmophen^{®} A 450 (**Beispiel 16**) bzw. 0,5 g Desmophen^{®} A 450 (**Beispiel 17**) gegeben und solange gerührt, bis homogene Mischungen erhalten wurden.

Mit den so erhaltenen Lösungen wurden jeweils eine Polycarbonat- und eine ABS-Platte beschichtet (90 µm) und die Beschichtung 1 h bei 130 °C bzw. 90°C gehärtet. Der Gitterschnittest ergab:

| **Bsp.-Nr.** | **Polycarbonat** | **ABS** |
|---|---|---|
| 15 | 0/0 | 0/0 |
| 16 | 0/0 | 0/0 |
| 17 | 0/3 | 4/5 |

### Beispiel 18

### D4-Silanol/ Desmophen^{®} A 450

1,5 g *cyclo*-{OSiMe[(CH₂)₂Si(OH)Me₂]}₄, 10 g Methylethylketon, 10 g Desmophen^{®} A 450, 13,6 ml Organosol, 7,5 ml TEOS und 1,2 ml 0,1 N Salzsäure wurden zusammengegeben und 2 h gerührt. Es wurde eine homogene Mischung erhalten.

Nach Applikation und Aushärtung wurde ein transparenter, rißfreier Film erhalten.

| **Naßfilmdicke [µm]** | **Trockentilmdicke [µm]** | **Bleistifthärte** | **Anti-Graffiti-Test** |
|---|---|---|---|
| 120 | 16 | 7 H | restlos entfernt |

### Vergleichsbeispiele 1a-1g

TEOS, H₃C-Si(OEt)₃ bzw. Ph-Si(OEt)₃/Desmophen^{®} A 665 (kein organisch-anorganisches Bindemittel)

Die Edukte wurden in der in der Tabelle angegebenen Reihenfolge zusammengegeben und 2 h lang gerührt. Es wurden homogene Mischungen erhalten.

Mit den so erhaltenen Lösungen wurde jeweils eine Glasplatte beschichtet (Naßfilmdicke 240 µm) und die Beschichtung 15 min bei 130° C gehärtet.

| **Beispiel** | **1a** | **1b** | **1c** | **1d** | **1e** | **1f** | **1g** |
|---|---|---|---|---|---|---|---|
| Desmophen^{®} A 665 [g] | 1,51 | 1,51 | 1,51 | 1,51 | 1,51 | 1,51 | 1,51 |
| (Organo)kieselsol [ml] | 2,22 | 2,20 | 1,81 | 2,11 | 1,97 | 1,80 | 2,11 |
| TEOS [g] | 0,86 | 0,53 | 0,94 | 0,98 | 0,77 | 0,95 | 0,98 |
| H₃C-Si(OEt)₃ [g] | 0,27 | 0,53 | 0,94 | - | - | - | - |
| C₆H₅-Si(OEt)₃ [g] | - | - | - | 0,21 | 0,41 | 0,41 | 0,21 |
| n-BuOH [g] | 1,63 | 1,72 | 1,63 | 1,68 | 1,82 | 1,79 | - |
| 0,1 n Salzsäure [g] | 0,19 | 0,17 | 0,24 | 0,19 | 0,18 | 0,21 | 0,19 |
| Trockenfilmdicke [µm] | 28 | 32 | 26 | 24 | 27 | 22 | 38 |
| Bleistifthärte | 1H | 1H | 1H | HB | HB | HB | 1H |
| Anti-Graffiti-Test | rosa | rosa | rosa | rosa | rosa | schwach rosa | rosa |

### Vergleichsbeispiele 2a und 2b

TEOS, H₃C-Si(OEt)₃ bzw. Ph-Si(OEt)₃/Desmophen® A 665 aus **Beispiel 14** (kein organisch-anorganisches Bindemittel)

Die Edukte wurden in der in der Tabelle angegebenen Reihenfolge zusammengegeben und 2 h lang gerührt. Es wurden homogene Mischungen erhalten.

Mit den so erhaltenen Lösungen wurde jeweils eine Glasplatte beschichtet (Naßfilmdicke 240 µm) und die Beschichtung 15 min bei 130° C gehärtet.

| **Beispiel** | **2a** | **2b** |
|---|---|---|
| Desmophen^{®} A 665 [g] | 1,51 | 1,51 |
| (Organo)kieselsol [ml] | 2,11 | 1,97 |
| TEOS [g] | 0,98 | 0,77 |
| C₆H₅-Si(OEt)₃ [g] | 0,21 | 0,41 |
| 2-Butanon [g] | 0,84 | 0,91 |
| 0,1 n Salzsäure [g] | 0,19 | 0,18 |
| Trockenfilmdicke [µm] | 42 | 38 |
| Bleistifthärte | 2 H | 2 H |
| Anti-Graffiti-Test | rosa | rosa |

## Patentansprüche

1. Transparente Mischungen, enthaltend:
A) ein oder mehrere organische Polymere,
B) anorganische Partikel mit einem Primärteilchendurchmesser von 1 bis 100 nm,
C) ein oder mehrere anorganisch-organische Bindemittel auf Basis von polyfunktionellen Organosilanen, die mindestens 2 Siliciumatome mit jeweils 1 bis 3 Alkoxy- oder Hydroxygruppen enthalten, wobei die Siliciumatome mit jeweils mindestens einer SiC-Bindung an eine die Siliciumatome verknüpfende Baueinheit gebunden sind und
D) Lösemittel,
**dadurch gekennzeichnet, dass** die anorganischen Partikel Kieselsole (SiO₂), Böhmit-Sole (Al(O)OH) und/oder TiO₂-Sole sind.

2. Organisch-anorganische Hybridmaterialien, die durch Enfernen der flüchtigen Bestandteile aus den Mischungen gemäß Anspruch 1 erhalten werden.

3. Verwendung der organisch-anorganischen Hybridmaterialien gemäß Anspruch 2 zur Herstellung von Formkörpern oder Oberflächenbeschichtungen.

## Claims

1. Transparent mixtures comprising:
A) one or more organic polymers,
B) inorganic particles with a primary particle diameter of from 1 to 100 nm,
C) one or more inorganic-organic binders based on polyfunctional organosilanes which comprise at least 2 silicon atoms having respectively from 1 to 3 alkoxy or hydroxy groups, where the silicon atoms have bonding by respectively at least one SiC bond to a structural unit linking the silicon atoms, and
D) solvent,
**characterized in that** the inorganic particles are silica sols (SiO₂), boehmite sols (Al(O)OH) and/or TiO₂ sols.

2. Organic-inorganic hybrid materials which are obtained via removal of the volatile constituents from the mixtures according to Claim 1.

3. Use of the organic-inorganic hybrid materials according to Claim 2 for producing mouldings or surface coatings.

## Revendications

1. Mélanges transparents, contenant :
A) un ou plusieurs polymères organiques,
B) des particules inorganiques ayant un diamètre moyen de particule de 1 à 100 nm,
C) un ou plusieurs liants organiques-inorganiques à base d'organosilanes polyfonctionnels qui contiennent au moins 2 atomes de silicium comportant chacun 1 à 3 groupes hydroxy ou alcoxy, les atomes de silicium étant liés chacun par au moins une liaison SiC à une unité structurale reliant les atomes de silicium et
D) un solvant,
**caractérisés en ce que** les particules inorganiques sont des sols de silice (SiO₂), des sols de boehmite (Al(O)OH) et/ou des sols de TiO₂.

2. Matériaux hybrides organiques-inorganiques, qui sont obtenus par élimination des composants volatils à partir des mélanges selon la revendication 1.

3. Utilisation des matériaux hybrides organiques-inorganiques selon la revendication 2, pour la production de corps moulés ou de revêtements de surfaces.
